# EUROPEAN PATENT APPLICATION

(11) **EP 2 706 642 A1**
(43) Date of publication of application: **12.03.2014**
(21) Application number: 12811825.4
(22) Date of filing: 11.07.2012
(51) Int. Cl.: H02J 3/32, H02J 7/00

(54) **BATTERY ASSEMBLY CONTROL SYSTEM**

(30) Priority: 12.07.2011 JP 2011153920
(71) Applicant: Sanyo Electric Co., Ltd., Moriguchi-shi, Osaka 570-8677 (JP)
(72) Inventor: NAKASHIMA, Takeshi, Moriguchi-shi Osaka 570-8677 (JP); NAMIKOSHI, Hiromichi, Nishinomiya-shi Hyogo 651-1413 (JP)
(74) Representative: Höhfeld, Jochen
(86) International application number: PCT/JP2012/067735
(87) International publication number: WO 2013/008859

(57) **Abstract**

The purpose of the present invention is to appropriately perform, in a battery assembly control system, processing for eliminating the voltage difference occurring when a plurality of battery control units are connected in parallel. The battery assembly control system (10) comprises a master controller (20), a power converter management unit (24), and power converters (26). Five battery units (40) are connected in parallel to the charging and discharging main bus (28) of one of the power converters (26). A switch board (50), including a plurality of second protection resistors (54), a plurality of switches (56), and a first protection resistor (58), is provided between each of the battery units (40) and the charging and discharging main bus (28). The second protection resistors (54) have a positive temperature coefficient and have a function of reducing the voltage difference among the four battery pack columns (44) connected in parallel to the sub-bus (52) of each of the battery units (40). The first protection resistor (58) has a function of preventing excess current.

## Description

### TECHNICAL FIELD

The present invention relates to a battery assembly control system, and more particularly to a battery assembly control system which carries out processing for eliminating a voltage difference among units of battery control connected in parallel.

### BACKGROUND ART

When electrical power consumption of a load changes, electricity demand and supply can be equalized by means of electricity storage devices. Secondary batteries, such as lithium ion secondary batteries, can be used as the electricity storage devices. In the secondary batteries such as lithium ion secondary batteries, a unit battery which is also referred to as a unit cell has an inter-terminal voltage of approximately 1 V to 4 V and has a relatively small capacity for charge/discharge current. Therefore, there is adopted a battery pack which serves as an assembled battery in which a plurality of unit cells are used. However, depending on electrical power consumption of a load, it is necessary to use a number of those battery packs connected in series or in parallel.

When the battery packs are connected in parallel, and voltages of the battery packs differ, current flows from a battery pack having higher voltage to a battery pack having lower voltage, and, in some cases, the current may become excessive current.

For example, concerning a voltage equalization circuit, Patent Document 1 points out that when, for example, lithium ion secondary batteries which have internal impedance lower than that of a conventional lead accumulator are directly connected in parallel, there is a possibility that excessive current flows into one of the batteries connected in parallel, due to slight differences in impedance and contact resistance attributable to manufacturing variations. Patent Document 1 discloses, in an electricity storage device in which there are connected in parallel column batteries in each of which a plurality of secondary batteries are connected, a process of judging whether or not to carry out voltage adjustment based on column battery information of each column battery, outputting an offset instruction for voltage adjustment from a voltage adjustment section when it is judged that voltage adjustment is necessary, and carrying out charge/discharge control by a power converter connected to each of the column batteries.

### Citation List

### Patent Documents

Patent Document 1: JP 2010-141970 A

### SUMMARY OF INVENTION

### Technical Problem

In order to eliminate a voltage difference when the secondary batteries are connected in parallel, a voltage equalization circuit may be used, but this results in a complicated system configuration. However, without preventing excessive current among the secondary batteries connected in parallel, the excessive current instantly flows if output terminals connected in parallel are short-circuited to the ground for some reason.

The object of the present invention is providing a battery assembly control system which can appropriately perform processing for eliminating a voltage difference when a plurality of units of battery control are connected in parallel, and preventing flow of excessive current even if output terminals of units of battery control connected in parallel are short-circuited to the ground.

### Solution to Problem

The battery assembly control system according to the present invention has a charge/discharge main bus, sub-buses connected to the main bus via a first protection resistor, and units of battery control connected to the sub-buses via second protection resistors, and in this invention, the first protection resistor has a resistance value which is constantly or temporarily equal to or greater than a resistance value of the second protection resistor.

### Advantageous Effects of Invention

According to the above configuration, the battery assembly control system has a charge/discharge main bus, sub-buses connected to the main bus via a first protection resistor, and units of battery control connected to the sub-buses via second protection resistors. The first protection resistor is provided between the charge/discharge main bus and the sub-buses, and the units of battery control are connected to the charge/discharge main bus via the first protection resistor and the second protection resistors connected in series. Because the first protection resistor has a resistance value equal to or greater than the second protection resistor, it can prevent flow of excessive current into the units of battery control even if, for example, the charge/discharge main bus is short-circuited for some reason.

### BRIEF DESCRIPTION OF DRAWINGS

[FIG. 1] FIG. 1 shows a configuration of a battery assembly control system in an embodiment according to the present invention.
[FIG. 2] FIG. 2 shows a graph describing a positive temperature characteristic of a second protection resistor in the embodiment according to the present invention.
[FIG. 3] FIG. 3 illustrates the operation of the second protection resistor which reduces a voltage difference among a plurality of units of battery control in the embodiment according to the present invention.
[FIG. 4] FIG. 4 shows, for comparison, excessive current flowing via the second protection resistor when the first protection resistor is not used.
[FIG. 5] FIG. 5 illustrates the operation of the first protection resistor in the embodiment according to the present invention.

### DESCRIPTION OF EMBODIMENTS

An embodiment of the present invention will now be described in detail below by reference to the drawings. Although lithium ion secondary batteries are described below as batteries, the batteries may also be secondary batteries other than these batteries. For example, they may also be nickel-hydrogen batteries or nickel-cadmium batteries. Because a battery assembly is adopted to obtain voltage and current corresponding to electrical power necessary for a load, the number of unit batteries constituting the battery assembly, the number of battery packs in which the unit batteries are combined, the number of units of batteries in which the battery packs are combined, etc. can be set as desired in accordance with specifications of the battery assembly control system.

In addition, although electrical power generated by solar power and external commercial power supply will be described below as electrical power sources connected to the battery assembly, electrical power sources other than these electrical power sources, including, for example, electrical power sources that generate electrical power from wind may also be used. Further, resistance values and voltage values described below are mere examples for illustrative purposes, and may be changed as desired according to power specification of the battery assembly control system, etc.

In the following description, components that are identical are assigned the same reference numbers, and repeated description will be omitted. Further, in the description herein, a reference number which has been used before will be used, if necessary.

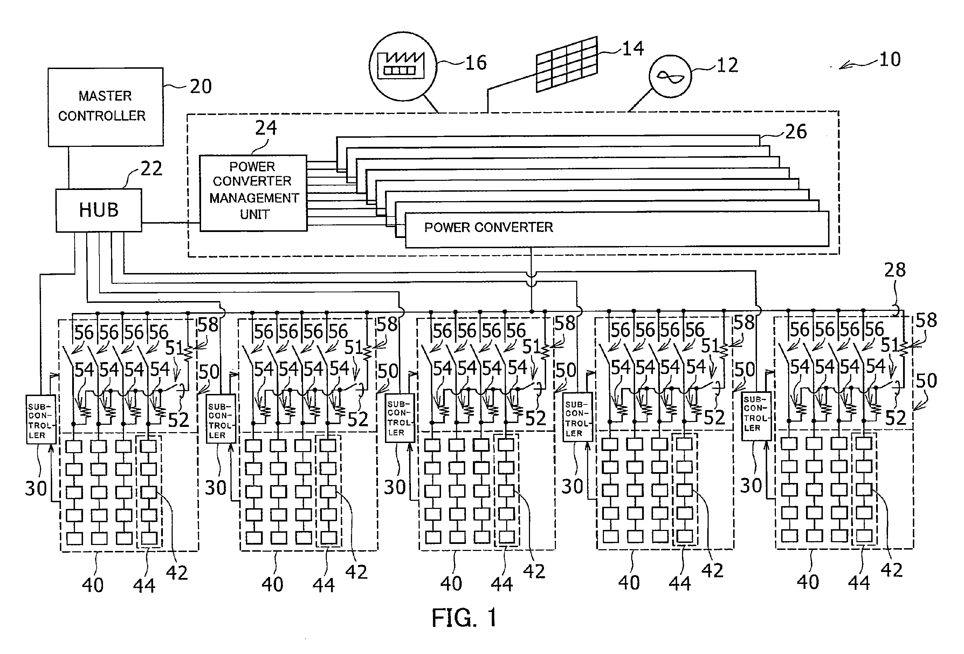

FIG. 1 shows a configuration of a battery assembly control system 10. The battery assembly control system 10 is a system that performs charge/discharge control of a battery assembly in an optimal manner through electrical power management among the battery assembly in which a plurality of batteries are combined, an electrical power source, and a load.

An external commercial power supply 12 and a solar power generation system 14 are included as electrical power sources. The external commercial power supply 12 is a single-phase or three-phase AC power source to which power is supplied from an external electrical power company such that power generated by various power generation methods, such as hydraulic power generation, nuclear power generation, and thermal power generation, are combined together in accordance with changes in demand and supply of electricity. The solar power generation system 14 is, for example, a large-scale system with a capacity of several MW. In this figure, a load 16 indicates a load in a plant. The load in a plant includes not only mechanical equipment but also general lighting, general air conditioning, kitchen equipment, business equipment such as servers and personal computers, air conditioning in the plant, etc.

In the battery assembly control system 10, in order to perform charge/discharge control of the battery assembly in an optimal manner, a system controller (not shown) generates, based on supply power information data on the power source side, load power information data on the load side, and battery power information data on the battery assembly side, an overall charge/discharge control instruction as one charge/discharge control instruction for overall electrical power management of these sides. The overall charge/discharge control instruction is an instruction instructing to, for example, "charge for Y seconds at X (kW)" or "charge until voltage becomes Z (V)".

A master controller 20 is a control unit having a function to send an assembly charge/discharge control instruction to a power convertor management unit 24 via a HUB 22 based on the overall charge/discharge control instruction received from the system controller (not shown).

The power convertor management unit 24 is a management device which manages the operating status of eight power converters 26. The power converters 26 are converters such as bidirectional AC/DC converters and bidirectional DC/DC converters that have a function to perform power conversion between AC power of the external commercial power supply 12 and DC power of the batteries, voltage conversion between voltage of the solar power generation system 14 and voltage of the batteries, or voltage conversion between voltage of the batteries and voltage of the load 16. More specifically, types of converters to be used are selected according to a content of conversion which is actually to be performed.

The power convertor management unit 24 is a management device which divides the entire battery assembly into eight portions according to the assembly charge/discharge instruction from the master controller 20, and assigns one power converter 26 to each of the eight portions, to thereby perform electrical power management. FIG. 1 shows a portion of the entire battery assembly which is connected to one power converter 26. One power converter 26 is connected to five battery units 40.

A charge/discharge main bus 28 is an electrical power bus connecting one power converter 26 to five battery units 40, and the five battery units 40 are connected to this charge/discharge main bus 28 in parallel. More specifically, each of the battery units 40 is connected to the charge/discharge main bus 28 via a switch board 50. Here, the switch board 50 is controlled by a sub-controller 30. As such, as one battery unit 40 is equipped with the switch board 50 and the sub-controller 30, these are all contained in one rack.

The battery unit 40 is formed by connecting a predetermined number of battery pack columns 44 in parallel, each column composed of a predetermined number of battery packs 42 connected in series. In the example shown in FIG. 1, five battery packs are connected in series to form one battery pack column 44, and then, four battery pack columns 44 are connected in parallel to form one battery unit 40. In other words, one battery unit 40 is composed of twenty battery packs 40. One battery pack 42 is formed by connecting, in series, unit batteries which are referred to as cells. A lithium ion secondary battery having a maximum terminal voltage of approximately 4 V may be used as a unit battery.

Inter-terminal voltage of each of the five battery packs 42 constituting the battery pack column 44 is detected as pack voltage by a voltage detector (not shown). In addition, a temperature of the battery pack 42 is detected as a pack temperature by a temperature sensor (not shown). Further, current flowing through each battery pack column 44 is detected as pack column current by a current detector (not shown). These data are transmitted to the sub-controller 30 which manages that battery unit 40.

The switch board 50 is a circuit board located between the battery unit 40 and the charge/discharge main bus 28, and includes a plurality of second protection resistors 54, a plurality of switches 56, and a first protection resistor 58.

The second protection resistors 54 are resistance elements provided to reduce a voltage difference among the four battery pack columns 44 connected in parallel in the battery unit 40. More specifically, the second protection resistors 54 are resistance elements provided among the battery pack columns 44 to reduce, when there is a voltage difference among the four battery pack columns 44, the voltage difference among the battery pack columns 44 by allowing the flow of current corresponding to the voltage difference. In this figure, as charge/discharge terminals of the battery pack columns 44 are connected to a sub-bus 52 in parallel via the second protection resistors 54, two second protection resistors 54 are connected in series between adjacent battery pack columns 44. Therefore, when there is a voltage difference between adjacent battery pack columns 44, current flows via these two second protection resistors 54 connected in series.

A resistance value of the second protection resistor 54 may be set based on a maximum voltage difference and a maximum charging current of the battery pack column 44 to which the second protection resistor 54 is connected. Therefore, when there is a voltage difference between the battery pack columns 44, the second protection resistor 54 can flow of allow current corresponding to the voltage difference, and the voltage difference between the battery pack columns 44 can be reduced. For example, if the battery pack column 44 in which five battery packs 42 are connected in series has a maximum voltage difference of 65 V and a maximum charging current of 11 A, then, a resistance value of the battery pack column 44 calculated from them is about 6Ω. Here, the battery pack column 44 is connected to another battery pack column 44 in parallel via two second protection resistors 54 connected in series. Therefore, if the second protection resistor 54 having a resistance value of 3 Ω or more is used, the voltage difference between the battery pack columns 44 connected in parallel can be reduced by allowing current to flow into the battery pack column 44 while keeping a maximum current of 11 A or less.

Although a general resistance element may also be used as the second protection resistor 54, a resistance element having a positive temperature characteristic is used herein. The resistance element having a positive temperature characteristic means a resistance element having a resistance value that increases with temperature. For example, when the voltage difference between the battery pack columns 44 is large, large current flows through the second protection resistor 54 and causes the second protection resistors 54 to generate heat. However, a rise in temperature caused by the heat generation causes increase of a resistance value and reduction of current. With such a feature, it is possible to maintain a constant amount of heat generation in the second protection resistor 54, regardless of the voltage difference between the two terminals of the resistance element. As such, because the use of a resistance element having a positive temperature characteristic as the second protection resistor 54 facilitates controlling the amount of heat generation, there is no need to use a resistance element having a large resistance value, even if the voltage difference is large.

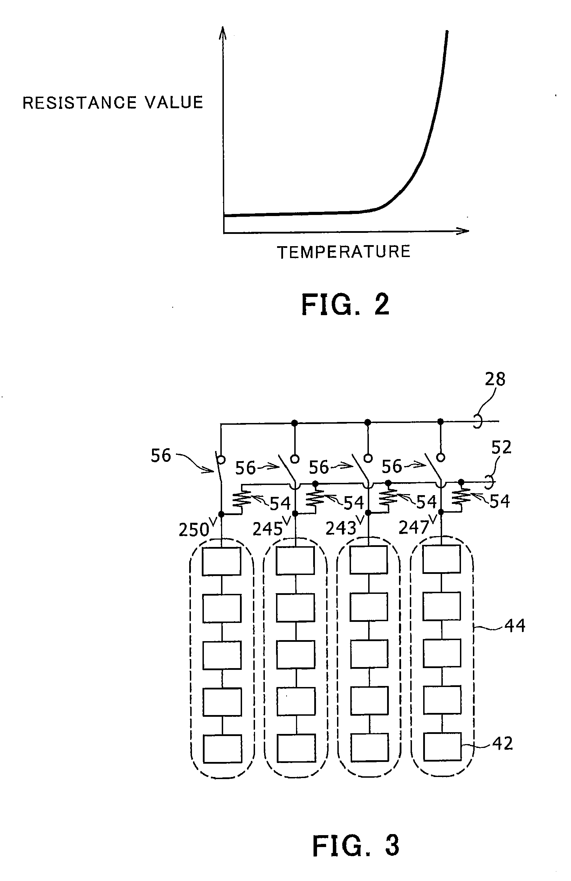

FIG. 2 shows temperature characteristics of a resistance value of the second protection resistor 54. In the second protection resistor 54 used in this figure, temperature characteristics of the resistance value are such that resistance is 3 Ω at ordinary temperature, approximately 4 Ω at about 100 °C, and approximately 35 Ω at about 130 °C. Of course, other positive temperature characteristics may also be used in accordance with, for example, an assumed voltage difference between the battery pack columns 44 and a setting of a period of time for equalizing a voltage difference, if any.

The switch 56 is an element for connecting the battery pack column 44 to the charge/discharge main bus 28 when the voltage difference between the battery pack columns 44 connected in parallel becomes equal to or smaller than a predetermined threshold voltage difference. One switch 56 is provided between the charge/discharge terminal of each battery pack column 44 and the charge/discharge main bus 28. There may also be provided two switches separately for charge and discharge use for each battery pack column 44. The threshold voltage difference may be determined in consideration of, for example, internal resistance of the switch 56 and may be set at, for example, ±1 V.

As such, in the battery unit 40, control is performed such that voltages of the charge/discharge terminals of the battery pack columns 44 are equalized on a per battery pack column 44 basis using the function of the second protection resistor 54, and after the voltages become within the threshold voltage difference, the switches 56 corresponding to the battery pack columns 44 are turned on. In this regard, each of the battery pack columns 44 can be referred to as a unit of battery control in the battery unit 40.

The battery pack column 44 is connected to the charge/discharge main bus 28 via the switch 56 and is also connected to the sub-bus 52 via the second protection resistor 54. The sub-bus 52 is an electrical power bus line connected to the charge/discharge main bus 28 via a switch 51. Although the switch 51 is turned on in a normal state, it is turned off only when the sub-bus 52 needs to be disconnected from the charge-discharge main bus 28 for some emergency reason, etc.

The first protection resistor 58 is provided between the charge/discharge main bus 28 and the sub-bus 52. The first protection resistor 58 is a resistance element which is provided to prevent flow of excessive current into the battery pack columns 44 when, for example, the charge/discharge main bus 28 is short-circuited to the ground for some reason. If the first protection resistor 58 is not provided, the charge/discharge main bus 28 is connected directly to the sub-bus 52. If, for example, the charge/discharge main bus 28 is short-circuited to the ground in this state, the battery pack columns 44 are connected to the ground via the second protection resistors 54.

That is, as voltage of the charge/discharge main bus 28 corresponds to the maximum voltage difference of the battery pack columns 44, the voltage becomes the maximum voltage of the battery pack columns 44 if the charge/discharge main bus 28 is short-circuited. This voltage has a value that is significantly larger than an assumed voltage difference between the adjacent battery pack columns 44; that is, the difference between voltage in the fully-charged state and voltage in the fully-discharged state (>0). Therefore, when the voltage of the charge/discharge main bus 28 is applied directly to the second protection resistor 54, excessive current which is larger than a current value assumed to address the voltage difference between the adjacent battery pack columns 44 is caused to flow.

The charge/discharge main bus 28 is short-circuited not only when there is contact between the casing and the connection between the charge/discharge main bus 28 and the power converter 26 for some reason, but also when no electrical charge is maintained in a capacitor provided in the power converter 26. In other words, the charge/discharge main bus 28 is short-circuited when voltage is applied to, for example, a short or a capacitor, while resistance components of the battery voltage of the battery unit 40 itself are almost negligible. The maximum voltage of the battery voltage of the battery unit 40 itself becomes 260 V when, for example, five battery packs 42, each having 52 V in the fully-charged state, are connected in series.

In order to prevent this excessive current from flowing into the battery pack columns 44, the first protection resistor 58 is used. The first protection resistor 58 has a resistance value which is constantly or temporarily equal to or greater than the resistance value of the second protection resistor 54.

That is, the resistance value of the first protection resistor 58 is set such that the current does not become excessive current for the battery pack columns 44 even if the maximum voltage of the battery pack columns 44 is applied when the charge/discharge main bus 28 is short-circuited. For example, when the maximum voltage of the battery pack column 44 is 260 V, and the resistance value of the second protection resistor 54 is set at 3 Ω to reduce the current to 11 A, the resistance value of the first protection resistor 58 must be at least 21 Ω. If, in addition to this, an amount of heat generation, etc. is taken into consideration, the resistance value of the first protection resistor 58 is set at, for example, 30 Ω. Further, in consideration of the case where the switch 51 and the switch 56 are closed at the same time by malfunction, the resistance value of the first protection resistor 58 may be set at 3 Ω, similar to the second protection resistor 54.

As such, even if, for example, the charge/discharge main bus bar 28 is short-circuited to the ground for some reason, provision of the first protection resistor 58 allows the current to flow through the battery pack columns 44 to the ground via the second protection resistors 54 and the first protection resistor 58 connected in series. As a result, it is possible to effectively prevent flow of excessive current into the battery pack columns 44.

Because the second protection resistor 54 has the positive temperature characteristic, when excessive current flows therethrough, it generates a large amount of heat, and the resistance value increases. In the above-noted example, the resistance value becomes approximately 200 Ω at 135 °C, whereas it is 6 Ω at ordinary temperature. However, because the resistance change takes a certain amount of time, it is too slow to prevent excessive current, and excessive current instantly flows into the battery pack columns 44 via the second protection resistors 54 before the resistance increases. As such, even if the resistance element having the positive temperature characteristic is used as the second protection resistor 54, there is provided the first protection resistor 58 having a resistance value which is sufficiently high to prevent flow of excessive current when the charge/discharge main bus 28 is short-circuited.

The sub-controller 30 has functions to obtain pack-column-current data of the four battery pack columns 44 constituting the battery unit 40 and cell voltage and pack-temperature data of the five battery packs 42 constituting each battery pack column 44, and transmit the data to the master controller 20 at an appropriate transmission time. Further, the sub-controller 30 has a function to calculate voltage of each battery pack column 44 from the cell voltage of the five battery packs 42 constituting each battery pack column 44, and monitor the resulting voltage.

The sub-controller 30 further has a function to control the operation of the switch 56. More specifically, when the voltage difference among the battery pack columns 44 is reduced by the operation of the second protection resistors 54, and becomes equal to or smaller than the predetermined voltage difference, the sub-controller 30 turns on the corresponding switches 56 in descending order from the battery pack column 44 having the highest voltage. This enables direct connection of the corresponding battery pack columns 44 to the charge/discharge main bus 28 without the second protection resistors 54 and the first protection resistor 58, and contributes to charge/discharge of the power converter 26. A voltage of ±1 V may be adopted as the threshold voltage difference, as described above.

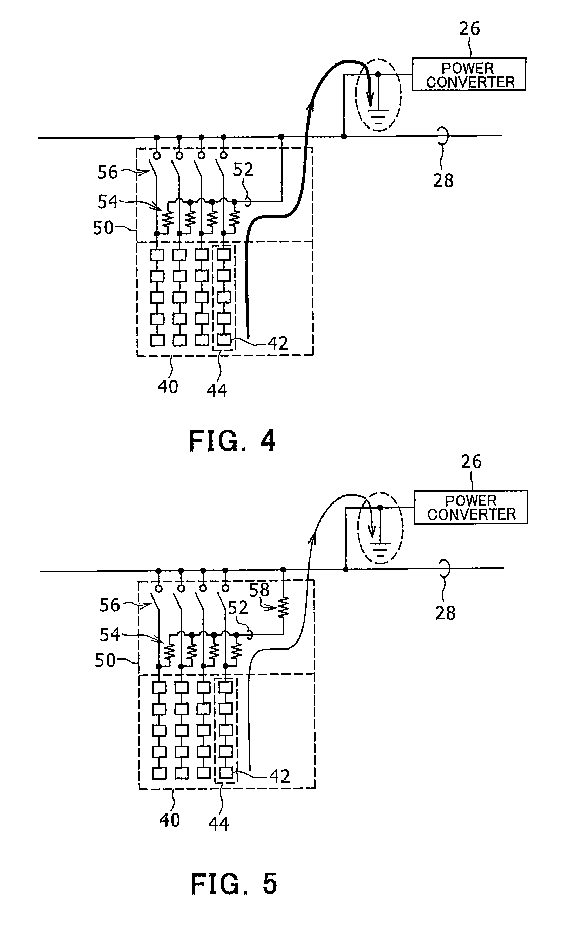

The operation of the above-noted configuration will be described in detail below by reference to FIGs. 3-5. FIG. 3 illustrates that the second protection resistors 54 operate so as to reduce the voltage difference among the battery pack columns 44. FIGs. 4 and 5 illustrate that the first protection resistor 58 operates so as to prevent excessive current when the charge/discharge main bus 28 is short-circuited to the ground.

FIG. 3 shows an enlarged view of one battery unit 40. Here, the description will be made while taking, as an example, the battery unit 40 which is first connected to the charge/discharge main bus 28. When the battery unit 40 is connected to the charge/discharge main bus 28, and the sub-controller 30 operates, voltages of the charge/discharge terminals of the four battery pack columns 44 are compared, and the battery pack column 44 having the highest voltage is identified. In the example shown in FIG. 3, the charge/discharge terminal voltages of the battery pack columns 44 are 250 V, 245 V, 243 V, and 247 V from the left side to the right side. The charge/discharge terminal voltages are voltages on the sub-bus 52 side of the battery pack columns 44, in each of which the five battery packs 42 are connected in series. As such, the charge/discharge terminal voltages differ among the battery pack columns 44, because the state of charge of each battery pack 42 differs.

Here, as the charge/discharge terminal voltage of the battery pack column 44 on the leftmost side in FIG. 3 is the highest voltage, only the switch 56 on the leftmost side is turned on among the four switches 56 shown in FIG. 3. In doing so, the voltage of the charge/discharge main bus 28 becomes 250 V.

Because the other switches remain turned off, current flows through the battery pack columns 44 via the second protection resistors 54 in accordance with the voltage difference of the charge/discharge terminals. The current flows from the charge/discharge terminal having higher voltage to the charge/discharge terminal having lower voltage, thereby addressing the voltage difference. When the voltage difference becomes equal to or smaller than the threshold voltage difference, the switches 56 corresponding to the battery pack columns 44 are turned on in descending order from the battery back column 44 having the highest voltage at that time.

FIG. 4 shows the charge/discharge main bus 28 which is short-circuited to the ground. In this figure, one of the five battery units 40 is extracted and shown. When the charge/discharge main bus 28 is short-circuited to the ground, the charge/discharge terminals of the battery pack columns 44 are connected to the ground via the second protection resistors 54. Therefore, discharge current flows from the battery pack columns 44 to the ground via the second protection resistors 54.

Although, similar to FIG. 4, FIG. 5 also shows the charge/discharge main bus 28 short-circuited to the ground, in FIG. 5, the first protection resistor 58 is provided between the charge/discharge main bus 28 and the sub-bus 52. By setting the resistance value of the first protection resistor 58 to be equal to or greater than the resistance value of the second protection resistor 54 and connecting the first protection resistor 58 to the second protection resistor 54 in series, it is possible to prevent discharge current from being excessive.

As such, it is possible to appropriately perform the processing of reducing the voltage difference among a plurality of battery pack columns 44 connected in parallel by means of the second protection resistors 54 and the switches 56. Further, the use of the first protection resistor 58 having the resistance value equal to or greater than the resistance value of the second protection resistor 54 can prevent flow of excessive current, even if the output terminals of the battery pack columns 44 are short-circuited to the ground.

Although, in the above description, the resistance element having the positive temperature characteristic is used as the second protection resistor 54, the second protection resistor 54 is not limited to this. For example, as the second protection resistor 54, there may also be used a resistance circuit which is achieved by providing a plurality of circuit units in each of which a resistor and a switch are connected in series and by connecting these circuit units in parallel. Because even such a resistance circuit takes some time to turn the switches on and off, use of the first protection resistor 58 has significance. In this resistance circuit, by turning on and off part of the switches connected to the resistors in series according to the voltage difference, the resistance value of the second protection resistor 54 is controlled.

Further, the second protection resistor 54 is not limited to a resistor which has a variable resistance value, and a resistor which always has a constant resistance value may also be used as the second protection resistor 54, so long as its resistance value is sufficiently high to prevent excessive current caused by the maximum possible voltage difference among the battery pack columns 44. Even if the second protection resistor 54 which always has a constant resistance value is used, the first protection resistor 58 may have a resistance value equal to or greater than that of the second protection resistor 54.

As described above, use of the resistance element having the positive-direction temperature characteristic as the first protection resistor 58 enables prevention of initial excessive current and facilitates control of an amount of heat generation. In addition, the first protection resistor 58 may also be achieved by connecting in series resistance elements which always have a constant resistance value, in order to prevent initial excessive current. In this case, the first protection resistor 58 may have a resistance value equal to or greater than that of the second protection resistor 54.

### Industrial Applicability

The battery assembly control system according to the present invention may be used in charge/discharge control of the battery assembly in which a plurality of batteries are connected in parallel.

### Reference Symbols List

10 battery assembly control system, 12 external commercial power supply, 14 solar power generation system, 16 load, 20 master controller, 22 HUB, 24 power convertor management unit, 26 power convertor, 28 charge/discharge main bus, 30 sub-controller, 40 battery unit, 42 battery pack, 44 battery pack column (unit of battery control), 50 switch board, 51 (emergency) switch, 52 sub-bus, 54 second protection resistor, 56 switch, 58 first protection resistor.

## Claims

1. A battery assembly control system comprising:
a charge/discharge main bus;
sub-buses connected to the main bus via a first protection resistor; and
units of battery control connected to the sub-buses via second protection resistors, wherein
the first protection resistor has a resistance value which is constantly or temporarily equal to or greater than a resistance value of the second protection resistor.

2. The battery assembly control system according to Claim 1, wherein a resistance element having a variable resistance value is used as the second protection resistor.

3. The battery assembly control system according to Claim 1 or 2, wherein each of the second protection resistors is a resistance element having a positive temperature characteristic which increases a resistance value when a temperature of the second protection resistor increases due to current flow corresponding to a voltage difference, if any, among the plurality of units of battery control.

4. The battery assembly control system according to any one of Claims 1 to 3, further comprising:
a plurality of switches provided between the plurality of units of battery control and the charge/discharge main bus; and
a sub-controller which, when the voltage difference among the plurality of units of battery control becomes equal to or smaller than a predetermined threshold voltage difference as a result of operation of voltage adjustment among the units of battery control by the second protection resistor, turns on the corresponding switches in descending order from the unit of battery control having the highest voltage.

5. The battery assembly control system according to Claim 4, wherein each of the plurality of units of battery control is a battery pack column in which a plurality of battery packs are connected in series, and the threshold voltage difference is set in advance for a voltage difference between series-connected inter-terminal voltages of the battery pack columns.
